# EUROPEAN PATENT SPECIFICATION

(11) **EP 0 530 292 B1**
(45) Date of publication and mention of the grant of the patent: **04.02.1998**
(21) Application number: 91910410.9
(22) Date of filing: 22.05.1991
(51) Int. Cl.: B01D 37/00, C02F 11/12, D21C 9/18

(54) **METHOD OF TREATING A SUSPENSION HAVING A LOW CONCENTRATION OF SUSPENDED MATERIAL**
VERFAHREN ZUR BEHANDLUNG EINER SUSPENSION, DIE EINE NIEDRIGE KONZENTRATION AN SUSPENDIERTEM MATERIAL AUFWEIST
PROCEDE DE TRAITEMENT D'UNE SUSPENSION A FAIBLE CONCENTRATION EN MATIERE SUSPENDUE

(30) Priority: 23.05.1990 SE 9001874
(43) Date of publication of application: 10.03.1993
(73) Proprietor: ANDERSSON, Albin, S-352 43 Växjö (SE)
(72) Inventor: ANDERSSON, Albin, S-352 43 Växjö (SE)
(74) Representative: Andersson, Per-Olof
(86) International application number: SE9100362
(87) International publication number: WO9117812

(56) References cited:
- DE-A- 1 960 365
- DE-C- 858 539
- NO-B- 139 300
- US-A- 4 041 560
- US-A- 4 472 242
- H. Rödel: "Hydromechanik", 5th edition, 1966, Georg Westermann Verlag, Braunschweig, pages 90-94

## Description

The present invention relates to a method of treating a suspension having a low concentration of suspended material and contained in a reservoir, such as a basin or a tub, wherein the suspension is flowed through a tube which has an inlet end and an outlet end and the interior of which communicates via a perforated portion with a closed chamber having an outlet.

It is known in the art e.g. to dewater a fibrous pulp suspension with the aid of a device having a tube with a perforated portion, and a closed chamber surrounding this portion. The fibrous pulp suspension is forced through the tube, e.g. by means of a screw, liquid being pressed out into the chamber through the strainer formed by the perforated tube portion and fibres accumulated therein. The liquid is drawn off from the chamber. The dewatered and, hence, concentrated suspension is also drawn off, but may, before this is done, be further concentrated in several similar, successive devices (see e.g. US-A-44 72 242).

When treating such suspensions, e.g. sewage water from households and industries, as are collected in reservoirs, e.g. basins, tubs and the like, the suspensions are pumped from the reservoirs to filtering or sedimentation plants from which liquid is drawn off, whereas the heavier material is collected to be safely stored or burnt. Since the plants employed are rather complicated, large and expensive, the treatment becomes costly as well.

The object of the present invention is, therefore, to provide a simple and inexpensive method of treating a suspension contained in a reservoir.

According to the invention, this object is achieved by a method, which is characterised by immersing the tube and the chamber in the suspension, the outlet end of the tube being connected to an outlet pipe, the inlet end of the tube being exposed to the suspension, and the outlet of the chamber being connected to an outlet pipe; continuously pumping the suspension through the tube by means of a first pump to form, close to the tube wall, a laminar boundary layer in which the concentration of suspended material is lower than in the remainder of the suspension and which is drawn off into the chamber through said perforated portion; and pumping the suspension having a lower concentration of suspended material out of said chamber by means of a second pump connected to the outlet pipe of the chamber, a lower pressure being maintained in said chamber than in said tube; and the tube and the chamber each having a connection, through which means for measuring the pressure difference between the tube interior and the chamber interior are to be introduced.

Preferably, use is made of submersible pumps which are immersed in the suspension in the reservoir.

The first pump is preferably arranged in the outlet pipe connected to the outlet end of the tube.

The invention will now be described in more detail below, reference being had to the accompanying drawings, in which
Fig. 1 is a longitudinal section of a device used for implementing the method according to the invention,
Fig. 2 schematically illustrates an alternative embodiment of the device,
Fig. 3 illustrates a preferred, practical application of the method according to the invention, and
Fig. 4 illustrates a test result.

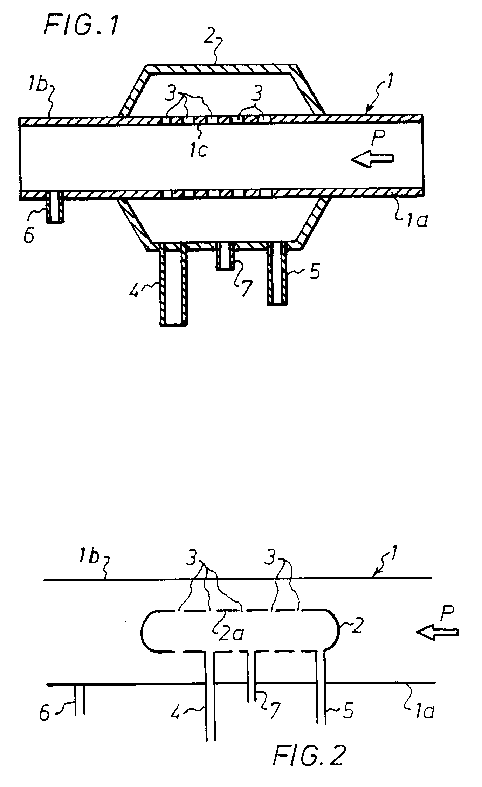

The device of Fig. 1 consists of a tube 1 having an inlet end 1a, an outlet end 1b and an intermediary perforated portion 1c, and a closed chamber 2 surrounding the perforated tube portion 1c and communicating, via said portion, with the interior of the tube 1. The perforations 3 of the perforated tube portion 1c may, for instance, be round or oval holes, or slits.

As will be described in more detail below, the suspension to be treated, e.g. a fibre suspension or a suspension in the form of sewage sludge, is flowed through the tube 1 in the direction indicated by the arrow P, part of the suspension flowing through the tube being drawn off into the chamber 2 via the perforations 3.

The chamber 2 has an outlet 4 through which the part of the suspension drawn off to the chamber leaves. Further, the chamber 2 is provided with a connection 5 for supplying liquid-pressure pulses and backwash-water for cleaning the device in order to prevent clogging of the perforations 3. The tube and the chamber 2 each have a connection 6 and 7, respectively, through which means for measuring the pressure difference between the tube interior and the chamber interior can be introduced.

In an alternative embodiment of the device, schematically shown in Fig. 2, the chamber 2 is arranged inside the tube 1 and has a perforated portion 2a formed with perforations 3, through which the chamber communicates with the tube interior. The outlet 4 and the connections 5 and 7 of the chamber 2 extend through the wall of the tube 1.

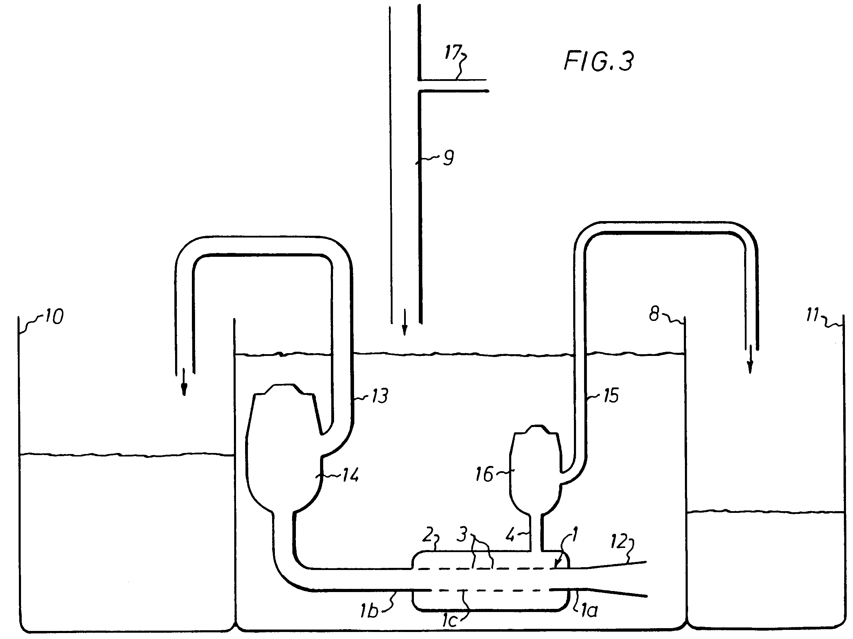

Fig. 3 illustrates a main basin 8 holding a suspension to be treated. The suspension is supplied to the basin through a supply pipe 9. Two side basins 10 and 11 are provided, one on each side of the main basin 8.

The device of Fig. 1 is here employed for treating the suspension. The inlet end 1a of the tube 1 is connected to an inlet nozzle 12, and its outlet end 1b is connected to an outlet pipe 13 provided with a submersible pump 14 for pumping suspension through the tube 1. The outlet 4 of the chamber 2 is connected to an outlet pipe 15 provided with a submersible pump 16 for pumping suspension out of the chamber 2. The assembly composed of the tube 1, the chamber 2 and the associated members 12, 13 and 15, and the pumps 14 and 16 is immersed in the main basin 8, the opening of the outlet pipe 13 being placed in the side basin 10 and that of the outlet pipe 15 being placed in the side basin 11, as shown in Fig. 3.

The suspension is continuously pumped (drawn) through the tube 1 by the pump 14 to form, close to the tube wall, a laminar boundary layer in which the concentration of suspended material is lower than in the remainder of the suspension. Via the perforations 3 in the tube wall, the boundary layer is drawn off into the chamber 2, whence it is pumped, through the outlet pipe 15, to the side basin 11 by the pump 16. A new boundary layer is formed as the suspension continues to flow through the tube 1, so that, after one boundary layer has been drawn off into the chamber 2 through one of the perforations 3, another boundary layer is formed and in turn drawn off into the chamber through a subsequent perforation, whereupon a new boundary layer is formed etc. Thus, the concentration of suspended material gradually increases in the suspension flowing through the tube 1 and subsequently pumped on to the side basin 10 via the outlet pipe 13.

The pressure difference between the tube interior and the chamber interior is adjusted, e.g. by adjusting the speed of rotation of the pumps 14 and 16. Naturally, the pumps 14 and 16 are so operated that a lower pressure is maintained in the chamber 2 than in the tube 1.

When the suspension contains suspended particles of different sizes, only the finer particles end up in the boundary layer, whence they are drawn off via the chamber 2. Thus, the plant fractionates the particles in the suspension. If the degree of fractionation is to be reduced, i.e. if the amount of finer particles drawn off via the chamber 2 is to be reduced, one may add a flocculation agent causing the finer particles to agglomerate into larger ones which do not end up in the boundary layer. The flocculation agent is conveniently added through a branch pipe 17 opening in the supply pipe 9.

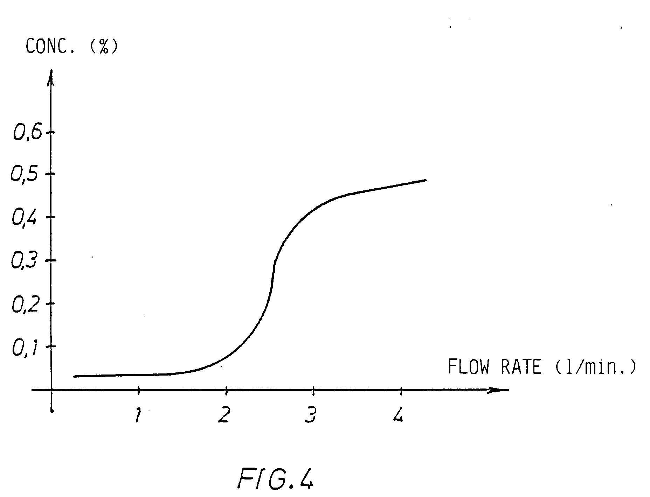

A device of the type shown in Fig. 1 was tested in practice. In the test device, the diameter of the tube 1 was 80 mm, and its perforation consisted of a circumferential slit having a width of 1.3 mm. The fibre suspension to be treated had a fibre concentration of 0.6%. The fibre suspension was pumped through the tube 1 at a flow velocity of 1 m/s, corresponding to a flow rate of about 300 l/min. The test result is shown in Fig. 4, where the fibre concentration, in per cent, of the fibre suspension drawn off from the chamber 2 is indicated as a function of the flow rate, in l/min, of the suspension drawn off. As is apparent from Fig. 4, the suspension originating from the boundary layer and drawn off from the chamber 2 had a considerably lower fibre concentration than the original suspension whose fibre concentration, as mentioned earlier, was 0.6%, as long as the flow rate of the suspension drawn off did not exceed about 2 l/min. Up to about 2 l/min, the fibre concentration of the suspension drawn off was about 0.04%, i.e. only about 1/15 of the fibre concentration (0.6%) of the original suspension.

It will be appreciated that several devices of the type shown in Fig. 1 can be interconnected in different ways to produce a multi-stage suspension treatment.

The plant shown in Fig. 3 employs submersible pumps 14 and 16 which are immersed in the suspension in the main basin 8. Naturally, the pumps 14 and 16 need not necessarily be submersible, and may as well be disposed outside the main basin 8. The pump 16, however, is preferably a submersible pump immersed in the suspension in the main basin 8, being thus optimally utilised as well as facilitating start-up of the plant. Many suspensions in which the suspended material has formed flocks cannot withstand the rough treatment in a pump which shatters the flocks. When treating such "sensitive" suspensions, the pump 14 is therefore preferably connected to the outlet end 1b of the tube 1, so that the flock-containing suspension does not pass the pump 14 until after it has been sucked through the treatment device.

## Claims

1. A method of treating a suspension having a low concentration of suspended material and contained in a reservoir (8), such as a basin, or a tub, wherein the suspension is flowed through a tube (1) which has an inlet end (1a) and an outlet end (1b) and the interior of which communicates, via a perforated portion (1c; 2a), with a closed chamber (2) having an outlet (4), **characterised** by immersing the tube (1) and the chamber (2) in the suspension, the outlet end (1b) of the tube (1) being connected to an outlet pipe (13), the inlet end (1a) of the tube being exposed to the suspension, and the outlet (4) of the chamber (2) being connected to an outlet pipe (15); continuously pumping the suspension through the tube (1) by means of a first pump (14) to form, close to the tube wall, a laminar boundary layer in which the concentration of suspended material is lower than in the remainder of the suspension and which is drawn off into the chamber (2) through said perforated portion (1c; 2a); and pumping the suspension having a lower concentration of suspended material out of said chamber by means of a second pump (16) connected to the outlet pipe (15) of the chamber, a lower pressure being maintained in said chamber (2) than in said tube (1); and the tube (1) and the chamber (2) each having a connection (6, 7), through which means for measuring the pressure difference between the tube interior and the chamber interior are to be introduced.

2. A method as claimed in claim 1, **CHARACTERISED** in that the first pump (14) is a submersible pump immersed in the suspension in said reservoir (8).

3. A method as claimed in claim 1 or 2, **characterised** in that the second pump (16) is a submersible pump immersed in the suspension in said reservoir (8).

4. A method as claimed in any one of claims 1 - 3, **characterised** in that said first pump (14) is arranged in the outlet pipe (13) connected to the outlet end (1b) of the tube (1).

## Patentansprüche

1. Verfahren zur Behandlung von Suspensionen mit einer niedrigen Konzentration von suspendiertem Stoff und in einem Behälter (8), wie z. B. ein Bassin oder eine Wanne, worin die Suspension durch ein Rohr (1), das einen Einlauf (1a) und einen Auslauf (1b) hat, fliesst, und dessen Innere mittels einen gelochten Teil (1c;2a) mit einer gesclossenen Kammer (2), die einen Abfluss (4) hat, in Verbindung steht, dadurch **gekennzeichnet,** dass das Rohr (1) und die Kammer (2) in der Suspension versenkt liegen, das Auslaufsende (1b) des Rohrs (1) Verbindung mit einem Abflussrohr (13) hat, das Einlaufsende (1a) des Rohrs zu der Suspension offen ist und der Abfluss (4) aus Kammer (2) Verbindung mit einem Abflussrohr (15) hat; dass die Suspension stetig durch das Rohr (1) von einer Primärpumpe (14) gepumpt ist, wobei sich eine laminare Grenzschicht, worin die Konzentration von suspendiertem Stoff geringer als in der übrigen Suspensionsmasse ist, nahe an der Rohrwand bildet und durch den gelochten Teil (1c;2a) in die Kammer (2) von einer mit dem Kammerabflussrohr (15) verbundenen Sekundärpumpe (16) abgezogen und aus der Kammer (2) herausgepumpt ist, während ein niedriger Druck in Kammer (2) als im Rohr (1) erhalten ist; dass das Rohr (1) und die Kammer (2) jeder eine Verbindung hat, wodurch Messgeräte (6,7), um die Druckdifferenz zwischen das Innere des Rohrs und das Innere der Kammer zu messen, eingeführt werden.

2. Verfahren nach Anspruch 1, dadurch **gekennzeichnet,** dass die Primärpumpe (14) versenkbar und in der Suspension im Behälter (8) versenkt ist.

3. Verfahren nach Anspruch 1 oder 2, dadurch **gekennzeichnet,** dass die Sekundärpumpe (16) versenkbar und in der Suspension im Behälter (8) versenkt ist.

4. Verfahren nach irgendeinem der Ansprüche 1 - 3, dadurch **gekennzeichnet,** dass die Primärpumpe (14) im Abflussrohr (13) in Verbindung mit dem Auslaufsende (1b) des Rohrs (1) angeordnet ist.

## Revendications

1. Méthode de traitement d'une suspension de bas concentration des matériaux suspendu et contenu dans un réservoir (8), à l'exemple d'un bassin ou d'une cuve, en quoi la suspension coule par un tube (1) avec un bout de l'entré (1a) et avec un bout de la sortie (1b) et en quoi l'intérieur par une partie perforée (1c, 2a) est en communication avec une chambre fermée (2), qui a une sortie (4), **caractérisé** par le fait que le tube (1) et la chambre (2) sont baissé dans la suspension, que le bout de la sortie (1b) du tube (1) est joint d'un tube de la décharge (13), que le bout de l'entrée (1a) du tube est ouvert à la suspension et que la sortie (4) de la chambre (2) est joint d'un tube de la sortie (15); que la suspension est permanentement pompé à travers du tube (1) par une pompe première (14) pour former près du mur du tube une couche frontière laminaire en quoi la concentration des matériaux suspendu est plus bas que dans le reste de la suspension et qui est tiré dans la chambre (2) à travers la partie perforée (1c, 2a) précité; et que la suspension avec la concentration des matériaux suspendu plus bas est pompé de la chambre précitée en moyen d'une pompe deuxième (16), qui est joint du tube de la sortie (15) de la chambre à quoi la pression est maintenu plus bas dans la chambre (2) précité que dans le tube (1); et que le tube (1) et la chambre (2) chaqun de tous les deux a une communication par où appareils pour mesurer la différence de la pression entre l'intérieur du tube et l'intérieur de la chambre sont introduit.

2. Méthode selon la revendication 1, **caractérisé** par le fait que la pompe première (14) est une pompe submersible et baissé dans la suspension du réservoir (8) précité.

3. Méthode selon la revendication 1, ou la revendication 2, **caractérisé** par le fait que la pompe deuxième (16) est une pompe submersible et baissé dans la suspension du réservoir (8) précité.

4. Méthode selon quelqu'une des revendications 1. - 3. **caractérisé** par le fait que la pompe première (14) précité est installé dans le tube de la décharge (13) et joint du bout de la sortie (1b) du tube (1).
